Europäisches Patentamt

European Patent Office

Office européen des brevets

(11) Numéro de publication: **0 031 750**
**B1**

(12) **FASCICULE DE BREVET EUROPEEN**

(45) Date de publication du fascicule du brevet: **14.11.84**

(51) Int. Cl.³: **G 01 S 3/80**

(21) Numéro de dépôt: **80401780.4**

(22) Date de dépôt: **12.12.80**

(54) **Goniomètre acoustique.**

(30) Priorité: **21.12.79 FR 7931487**

(43) Date de publication de la demande:
**08.07.81 Bulletin 81/27**

(45) Mention de la délivrance du brevet:
**14.11.84 Bulletin 84/46**

(84) Etats contractants désignés:
**DE GB IT NL SE**

(56) Documents cités:
**US-A-3 383 690**
**US-A-3 392 392**
**US-A-3 859 621**
**US-A-3 935 575**
**US-A-4 170 774**

(73) Titulaire: **THOMSON-CSF**
**173, Boulevard Haussmann**
**F-75379 Paris Cedex 08 (FR)**

(72) Inventeur: **Ravel, Paul**
**THOMSON-CSF SCPI 173, bld Haussmann**
**F-75360 Paris Cedex 08 (FR)**
Inventeur: **Vernet, Jean-Louis**
**THOMSON-CSF SCPI 173, bld Haussmann**
**F-75360 Paris Cedex 08 (FR)**

(74) Mandataire: **Wang, Pierre et al**
**THOMSON-CSF SCPI 173, Bld Haussmann**
**F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 031 750 B1

## Description

La présente invention se rapporte aux dispositifs de goniométrie acoustique utilisant des mesures de déphasage entre des signaux reçus par des capteurs d'une antenne acoustique, les signaux provenant de sources sonores à localiser en direction. Chaque source émet un signal sensiblement sinusoïdal à une certaine fréquence et le dispositif de goniométrie doit permettre de localiser des sources à des fréquences comprises dans une large bande de fréquence.

Il est connu, notamment par le brevet français No. 1.605.544, de disposer des capteurs aux quatre coins d'un carré formant une base de mesure, ou base, pour les mesures de localisation dans une bande de fréquence. Les déphasages entre capteurs situés sur une même diagonale sont mesurés et les signaux de ces déphasages sont appliqués sur les plaques horizontales et verticales d'un oscillographe fournissant la direction de localisation cherchée dans le plan formé par les capteurs.

Pour pouvoir déterminer la direction des sources sans ambiguïté, il faut que les déphasages en valeurs absolues soient inférieures à une valeur $\Phi_{max}$ inférieure à 180° et qui dépend du niveau de bruit. Ainsi pour une base de dimension donnée les fréquences auxquelles il est possible de travailler sont comprises entre deux fréquences $f_{min}$ et $f_{max}$ et l'on a généralement $f_{max}/f_{min} \simeq 3$. Si donc on veut localiser des sources pour des spectres plus larges il est nécessaire de multiplier le nombre de bases.

La présente invention a l'avantage d'augmenter notablement la bande passante d'une base par rapport à l'art antérieur augmentant ainsi le domaine spectral de surveillance.

Le brevet US—A—3 935 575 décrit un dispositif de détermination de la direction d'une source notamment par trois capteurs disposés aux sommets d'un triangle rectangle isocèle.

Les déphasages utilisés pour le calcul de l'angle de cette direction sont ceux entre les signaux reçus par les capteurs situés sur un même côté de l'angle droit du triangle.

Ce dispositif a une plus grande bande passante, mais une sensibilité plus faible que le dispositif à quatre capteurs, avec mesures de déphasages aux diagonales.

Le dispositif suivant l'invention a l'avantage par rapport à ces goniomètres, suivant l'art antérieur, d'avoir à la fois une grande bande passante et une bonne sensibilité.

Selon l'invention, le goniomètre acoustique pour la détermination de la direction d'angle $\theta$ de sources sonores émettant des signaux sensiblement sinusoïdaux, est conforme à l'actuelle revendication 1.

D'autres caractéristiques et avantages ressortiront de la description qui va suivre illustrée par les figures qui représentent:

— la Figure 1, une base de goniomètre;

— la Figure 2, le schéma d'un goniomètre suivant l'art antérieur;
— les Figures 3a à 3e le schéma d'un déphaseur apériodique avec les signaux correspondants;
— la Figure 4, le schéma d'un goniomètre, suivant l'invention;
— les Figures 5 et 6, les schémas d'un goniomètre, suivant des variantes de l'invention;
— la Figure 7, le schéma d'un goniomètre avec microprocesseur suivant une autre variante de l'invention;
— la Figure 8, un schéma de disposition des capteurs pour deux bases, suivant l'invention.

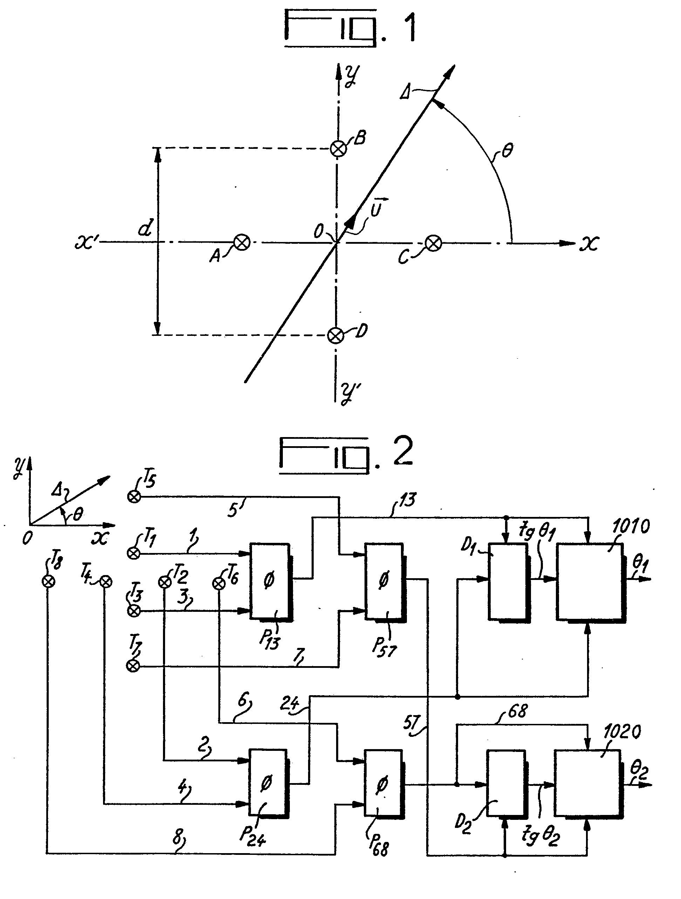

Le principe de fonctionnement d'un goniomètre, suivant l'art antérieur, est montré par la Figure 1. Une base est formée par les quatre capteurs A, B, C et D placés aux coins d'un carré. On considère une onde acoustique incidente de direction de propagation $\Delta$, de vecteur unitaire $\vec{u}$ et de fréquence f.

De façon générale si l'on considère deux capteurs placés en des points P et Q (non représentés sur la figure), le déphasage $\varphi_{PQ}$ entre les signaux captés en P et en Q est donné par:

$$\varphi_{PQ} = \frac{2\pi f}{C} \vec{u} \cdot \overrightarrow{PQ} \qquad (1)$$

où C est la vitesse des ondes.

L'application de la relation (1) à des capteurs opposés sur les diagonales donne:

$$\varphi_{AC} = \frac{2\pi f}{C} \cdot d \cos\theta$$

et $\qquad\qquad\qquad\qquad (2)$

$$\varphi_{BD} = \frac{2\pi f}{C} \cdot d \sin\theta$$

où d est la longueur des diagonales du carré ABCD et $\theta$ est l'angle de la droite $\theta$ avec l'axe Ox parallèle à $\overrightarrow{AC}$.

L'angle $\theta$ est trouvé à partir des relations (2) par:

$$\text{tg}\theta = \varphi_{BD}/\varphi_{AC} \qquad (2')$$

Ces déphasages sont mesurés à partir des deux signaux provenant des deux capteurs et la valeur d'angle fournie est nécessairement comprise entre —180° et +180°.

Ces déphasages en valeurs absolues doivent donc être inférieurs à 180° pour obtenir une mesure de la direction $\theta$ sans ambiguïté; en fait, en présence de bruit, pour ne pas dépasser 180°, il faut que ces déphasages en valeurs absolues soient inférieurs à une valeur $\Phi_{max}$, qui dépend du rapport signal sur bruit. Pour une distance d donnée, la fréquence maximum $f_{max}$

admissible sur un tel goniomètre est donnée d'après les relations (2) par:

$$f_{max} = \Phi_{max} \cdot \frac{C}{2\pi d}$$

Un tel goniomètre est également limité vers les basses fréquences par une fréquence minimum $f_{min}$. La valeur de $f_{min}$ dépend de la précision à obtenir pour l'angle $\theta$ de la direction $\Delta$, pour tout l'horizon et du rapport signal sur bruit qui limite la précision de la mesure du déphasage. On trouve généralement que $f_{max}/f_{min}$ est de l'ordre de 3.

Un goniomètre suivant l'art antérieur, est montré schématiquement par la Figure 2. Une antenne comprend deux bases composées chacune de quatre capteurs disposés aux coins d'un carré. La première base comprend les capteurs, $T_1$, $T_2$, $T_3$ et $T_4$, la longueur de la diagonale du carré étant $d_1$. La seconde base comprend les capteurs $T_5$, $T_6$, $T_7$ et $T_8$ et la longueur de la diagonale du carré est $d_2$.

La première base fonctionne pour les fréquences situées entre $f_{min}^{(1)}$ et $f_{max}^{(1)}$ et la seconde base entre $f_{min}^{(2)}$ et $f_{max}^{(2)}$. On prend généralement $f_{max}^{(2)} = f_{min}^{(1)}$ et dans ce cas on a:

$$\frac{d_2}{d_1} = \frac{f_{max}^{(2)}}{f_{min}^{(2)}} = \frac{f_{max}^{(1)}}{f_{min}^{(1)}} \qquad (3)$$

Si l'on prend $d_2/d_1 = 3$, deux bases permettent de surveiller dans une bande de fréquence, pour laquelle les fréquences extrémes sont dans un rapport de 9.

A chaque base sont associés des phasemètres fonctionnant dans la bande de fréquence de la base correspondante. C'est ainsi que les déphasages entre les signaux reçus par les capteurs $T_1$ et $T_3$ sont mesurés par le phasemètre $P_{13}$ et ceux des signaux reçus par les capteurs $T_2$ et $T_4$ par le phasemètre $P_{24}$. Les signaux de ces déphasages sont obtenus sur les connexions 13 et 24. Sur toutes les figures de cette description on a numéroté les connexions et les déphaseurs par les numéros correspondants à ceux des capteurs.

Un circuit diviseur $D_1$ reçoit à ses entrées les signaux de déphasage 13 et 24 fournissant ainsi la valeur $tg\theta_1$, $\theta_1$ étant l'angle de la direction d'une onde incidente située dans la bande de fréquence de la première base. On a représenté symboliquement un circuit 1010 fournissant l'angle $\theta_1$ à partir de la valeur $tg\theta_1$.

Le circuit 1010 reçoit également les valeurs des déphasages 13 et 24 pour lever les ambiguïtés sur $\theta_1$, à partir des signes respectifs de $sin\theta_1$ et $cos\theta_1$.

De même pour la seconde base les déphaseurs $P_{57}$ et $P_{68}$ fournissent des signaux de déphasage, qui sont appliqués à un autre circuit de division $D_2$ fournissant la valeur $tg\theta_2$, $\theta_2$ étant l'angle de la direction d'une onde incidente qui est située dans la bande passante de la seconde base. Un circuit 1020 fournit cette valeur de $\theta_2$.

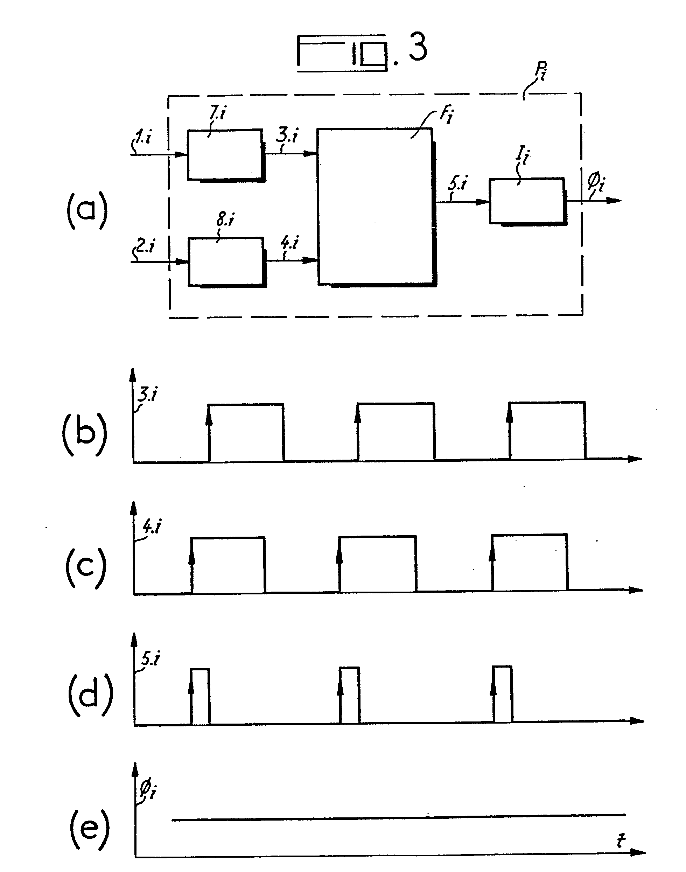

La Figure 3a donne un exemple de réalisation d'un phasemètre apériodique $P_i$. Les signaux sinusoïdaux à comparer 1.i et 2.i sont appliqués respectivement à des circuits écrêteurs 7.i et 8.i, de sorties 3.i et 4.i. Ces signaux écrêtés sont appliqués à une bascule $F_i$ et les impulsions produites en 5.i sont appliquées à un circuit intégrateur $I_i$ qui fournit à sa sortie un signal $\Phi_i$ proportionnel à la différence de phase des signaux 1.i et 2.i.

Les signaux temporels en 3.i, 4.i, 5.i et $\Phi_i$ sont montrés par les Figures 3a, 3b, 3c, 3d et 3e.

Le signe de la phase $\Phi_i$ est déterminé en plus par des circuits logiques à partir des signaux 3.i et 4.i par exemple (non représentés).

Le goniomètre suivant l'invention utilise pour la détermination de la direction des ondes sonores, des bases comprenant également 4 capteurs disposés suivant un carré mais utilisant les déphasages de capteurs adjacents du carré.

Ce dispositif permet d'élargir la bande de fréquence d'une base par rapport à l'art antérieur.

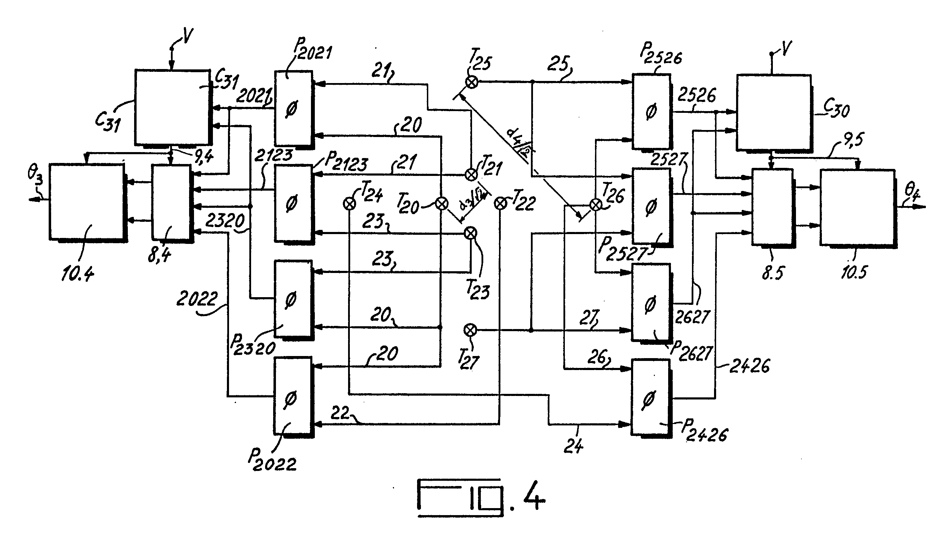

La Figure 4 donne un exemple de réalisation suivant l'invention. Une première base comprend les capteurs $T_{20}$, $T_{21}$, $T_{22}$ et $T_{23}$, la longueur de la diagonale étant $d_3$. Une deuxième base comprend les capteurs $T_{24}$, $T_{25}$, $T_{26}$ et $T_{27}$ la longueur de la diagonale étant égale à $d_4$. Avec les mêmes conventions de notation que précédemment les phasemètres portent les numéros correspondants aux signaux et aux transducteurs.

Les phasemètres $P_{2123}$ et $P_{2022}$ mesurent les déphasages entre les signaux reçus par les capteurs opposés par la diagonale de la première base. Les phasemètres $P_{2021}$ et $P_{2320}$ mesurent les déphasages entre les signaux reçus par les capteurs adjacents sur le carré, respectivement $T_{20}$, $T_{21}$ et $T_{23}$, $T_{20}$.

A partir des signaux en 2021 et 2320 fournis par les phasemètres $P_{2021}$ et $P_{2320}$, il est possible de calculer l'angle d'inclinaison $\theta$ de la droite $\Delta$. En effet en se reportant à la Figure 1 et à la relation (1) on trouve:

$$\varphi_{AB} = \frac{2\pi f}{C} \vec{u} \overrightarrow{AB} = \frac{2\pi f}{C} \frac{d}{\sqrt{2}} \cos(\theta - \frac{\pi}{4})$$

et $\qquad (5)$

$$\varphi_{BC} = \frac{2\pi f}{C} \vec{u} \overrightarrow{BC} = \frac{2\pi f}{C} \frac{d}{\sqrt{2}} \sin(\theta - \frac{\pi}{4})$$

on en déduit:

$$\theta = \frac{\pi}{4} + arc\ tg(\frac{\varphi_{BC}}{\varphi_{AB}}) \qquad (5')$$

Pour les mêmes raisons que précédemment les déphasages doivent être inférieurs à une valeur

$\Phi_{max}$, si l'on utilise les déphasages entre capteurs adjacents, la fréquence maximum admissible $f_{max}^{(c)}$ est donnée par:

$$f_{max}^{(c)} = \frac{C}{2\pi d} \cdot \sqrt{2}\,\Phi_{max} \qquad (6)$$

alors que la fréquence maximum pour les déphasages entre capteurs en diagonale est donné par:

$$f_{max}^{(d)} = \frac{C}{2\pi d} \cdot \Phi_{max} \qquad (7)$$

Les relations (6) et (7) montrent que, en utilisant la mesure de déphasages entre capteurs adjacents, la fréquence maximum est multipliée par $\sqrt{2}$, pour une même base.

Pour garder aux fréquences basses de la bande la même précision de mesure sur la direction $\theta$, les déphasages obtenus entre capteurs en diagonale sont utilisés, tant que ces déphasages peuvent être mesurés, c'est-à-dire tant qu'il restent inférieurs à la valeur $\Phi_{max}$.

A la fréquence $f_{max}^{(d)}$, les déphasages $\varphi_{AC}$ et $\varphi_{BD}$ en valeurs absolues sont maximums et égaux à $\Phi_{max}$ pour $\theta = 0$ et $\theta = \pi/2$ à $\pi$ près. Pour ces directions les déphasages en valeur absolue entre les capteurs de deux côtés adjacents sont égaux à $\Phi_{max}/2$. Par conséquent les déphasages $\varphi_{AC}$ et $\varphi_{BD}$ ne dépasseront pas $\Phi_{max}$, quelque soit la direction $\theta$ et la fréquence f de l'onde incidente, lorsque les déphasages qui correspondent à deux côtés adjacents ne dépassent pas la valeur $\Phi_{max}/2$.

En se réportant à la Figure 4, le fonctionnement de la première base est le suivant: le circuit $C_{31}$ compare en valeur absolue les déphasages 2021 et 2320 avec la valeur $V = \Phi_{max}/2$ et fournit un signal de commutation en 9.4 à un circuit de commutation 8.4. Ce circuit de commutation 8.4 reçoit les signaux 2021, 2123, 2022 et 2320. Si les deux déphasages 2021 et 2320 sont inférieures à V, les déphasages 2123 et 2022 sont transmis au circuit de calcul de 10.4 qui fournit la valeur $\theta_3$ de $\theta$ suivant la relation (2'); en revanche si l'un des deux déphasages 2021 et 2320 est supérieur à V, les signaux en 2021 et 2320 sont transmis au circuit de calcul 10.4 qui fournit la valeur $\theta_3$ de $\theta$ suivant la relation (5'). Le circuit 10.4 reçoit également le signal de commutation en 9.4.

La deuxième base fonctionne de façon analogue à la première par les phasemètres $P_{2526}$, $P_{2527}$, $P_{2627}$ et $P_{2426}$. Le circuit de comparaison $C_{30}$ reçoit les valeurs des deux déphasages 2526 et 2627 et commande un circuit de commutation 8.5 en 9.5. Le circuit 8.5 reçoit les déphasages des capteurs en diagonale et des capteurs adjacents comme pour la première base. Le circuit de calcul 10.5 analogue an circuit 10.4 fournit la valeur $\theta_4$ de $\theta$.

La première base fonctionne entre des fréquences $f_{min}^{(3)}$ et $f_{max}^{(3)}$ et la deuxième base entre les fréquences $f_{min}^{(4)}$ et $f_{max}^{(4)}$ et l'on prend généralement:

$$f_{max}^{(4)} = f_{min}^{(3)}$$

Avec le même rapport signal sur bruit que précédemment on aura:

$$f_{max}^{(3)}/f_{min}^{(4)} = 9 \cdot (\sqrt{2})^2 = 18$$

et

$$d_4/d_3 = 3 \times \sqrt{2}$$

ce qui montre qu'avec deux bases le rapport des fréquences extrêmes de la bande a doublé par rapport à l'art antérieur.

Suivant une variante de l'invention seuls les déphasages entre capteurs adjacents sont mesurés. Avec les notations de la Figure 1 et d'après la relation (1) on a:

$$\varphi_{AB} + \varphi_{BC} = \varphi_{AC}$$

et

$$\varphi_{AB} - \varphi_{BC} = \varphi_{DB} \qquad (8)$$

Ces relations montent que les déphasages entre capteurs en diagonale peuvent être calculés directement, à partir des deux déphasages entre capteurs adjacents.

Pour cette variante, les valeurs de déphasages calculées pour la diagonale d'après la relation (8) peuvent dépasser $\Phi_{max}$, les valeurs absolues de $\varphi_{AB}$ et $\varphi_{BC}$ restant inférieures à $\Phi_{max}$.

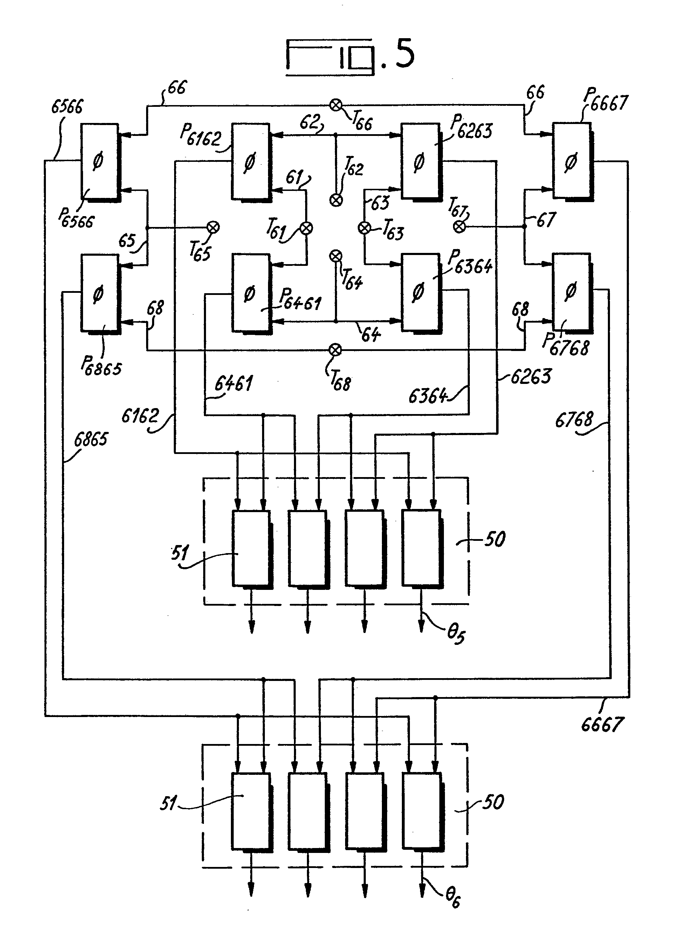

Une réalisation est montrée par la Figure 5 comprenant les deux bases constituées par les capteurs $T_{61}$, $T_{62}$, $T_{63}$, $T_{64}$ et $T_{65}$, $T_{66}$, $T_{67}$, $T_{68}$. Les traitements des signaux pour les deux bases sont identiques. Pour la première base, on utilise les phasemètres $P_{6162}$, $P_{6263}$, $P_{6364}$ et $P_{6461}$ et pour la deuxième les phasemètres $P_{6566}$, $P_{6667}$, $P_{6768}$ et $P_{6865}$.

En fait comme le montre la relation (8), les mesures peuvent se faire pour une base avec un couple de phasemètres choisi parmi les 4 couples possibles. Suivant cette réalisation, cette redondance est utilisée en cas de panne d'un capteur.

Les quatre paires de signaux qui correspondent, pour chaque base, aux quatre couples possibles de déphasages de deux côtés adjacents sont envoyés sur un ensemble 50 de quatre circuits de traitement 51.

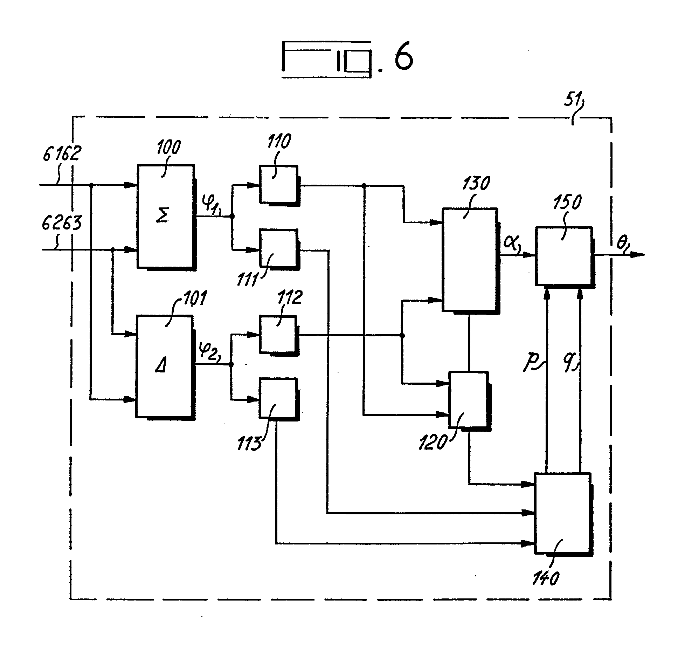

La Figure 6 représente un exemple de réalisation d'un circuit de traitement 51 de deux signaux comme par exemple 6162—6263.

Les signaux 6162 et 6263 sont appliqués à un circuit d'addition 100 et à un circuit de soustraction 101. A la sortie du circuit 100 est obtenu le déphasage $\varphi_1$ entre les capteurs $T_{61}$ et $T_{63}$, et à la sortie du circuit 101 le déphasage $\varphi_2$ entre les capteurs $T_{62}$ et $T_{64}$. Les circuits 110, 111, 112 et 113 connectés à l'additionneur 100 et au soustracteur 101 fournissent en sortie respectivement la valeur absolue et le signe

de $\varphi_1$ et $\varphi_2$. Le signe est fourni sous forme d'un signal binaire égal à 0 ou 1. Les valeurs absolues $|\varphi_1|$ et $|\varphi_2|$ sont envoyées d'une part à un comparateur 120 qui donne en sortie un signal binaire égal à 0 ou 1 suivant le résultat de la comparaison, et d'autre part à un circuit 130 qui reçoit le signal binaire issu du comparateur.

Le circuit 130 calcule un angle $\alpha$ tel que $\alpha = $ arc tgR avec

$$R = |\varphi_1|/|\varphi_2| \text{ si } |\varphi_1| < |\varphi_2|$$
ou
$$R = |\varphi_2|/|\varphi_1| \text{ si } |\varphi_2| < |\varphi_1|$$

de manière à obtenir le maximum de précision. L'angle $\alpha$ obtenu est compris entre 0 et $\pi/4$ et la valeur de l'angle $\theta$ est fournie par le circuit 150 qui réalise l'opération

$$\theta = p\alpha + q\,\frac{\pi}{2}$$

où $p = \pm 1$ et q est un nombre entier. les valeurs de p et q sont envoyées au circuit 150 par l'intermédiaire d'une mémoire adressable 140 qui reçoit les trois signaux binaires représentatifs des deux signes et du résultat de la comparaison entre $|\varphi_1|$ et $|\varphi_2|$. Notons que, pour trois signaux binaires identiques, les valeurs de p et de q choisies diffèrent d'un circuit 51 à un autre.

Si aucun capteur n'est en panne, on obtient en sortie des circuits 51 quatre valeurs $\theta_5$ et $\theta_6$ de l'angle $\theta$, qui correspondent respectivement aux deux directions d'une onde incidente reçue dans la bande de fréquences de la première base et de la deuxième base. Si un capteur d'une base est en panne, la valeur de la direction, $\theta_5$ ou $\theta_6$, est obtenue en sortie du circuit 51 qui reçoit les signaux des phasemètres mesurant les déphasages entre les trois capteurs de la base restant en fonction.

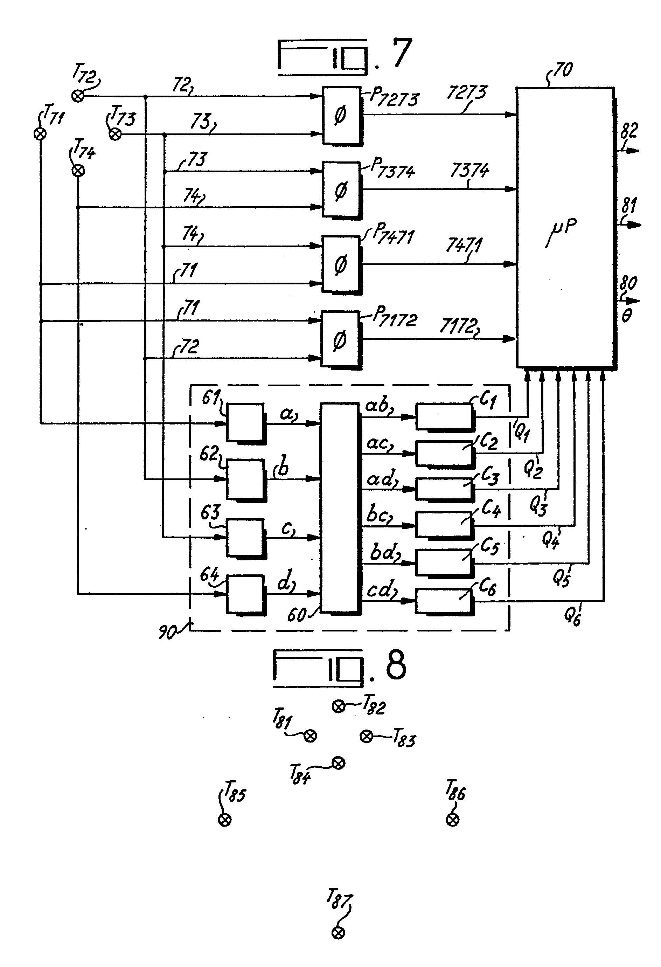

La Figure 7 montre une variante de l'invention du traitement des signaux pour une base composée des capteurs $T_{71}$, $T_{72}$, $T_{73}$ et $T_{74}$. Les signaux de déphasage entre les capteurs adjacents sont obtenus par les phasemètres $P_{7172}$, $P_{7273}$, $P_{7374}$ et $P_{7471}$ en 7172, 7273, 7374 et 7471. Ces signaux sont appliqués à un microprocesseur 70 qui fournit sur sa sortie 80 l'angle $\theta$ de l'onde incidente.

Le microprocesseur exécute les différentes opérations qui étaient effectuées précédemment par chaque circuit 51 pour obtenir un angle $\theta$ à partir de deux valeurs de déphasages. Pour cela le microprocesseur comporte une mémoire programmée contenant le programme de calcul de $\theta$ avec les étapes de calcul qui correspondent aux différentes fonctions du circuit 51.

De plus, suivant l'invention, les signaux 71, 72, 73 et 74 provenant des capteurs de la base sont envoyés dans un ensemble de circuits 90 qui fournit au microprocesseur six signaux binaires $Q_1$, $Q_2$, $Q_3$, $Q_4$, $Q_5$ et $Q_6$ formant un numéro. Ce numéro est testé pour aboutir au choix du couple de valeurs de déphasages correspondant aux trois capteurs dont les signaux sont relativement les moins différents en amplitude; en particulier ces signaux binaires permettent de déterminer si un capteur est en panne ou inutilisable par suite de sa trop faible amplitude.

Dans l'ensemble 90 les signaux en 71, 72, 73 et 74 des quatre capteurs sont appliqués à des circuits de détection et d'intégration 61, 62, 63 et 64 qui fournissent à leurs sorties des signaux respectivement égaux à a, b, c, et d. Un circuit de calcul 60 fournit les signaux ab, ac, bc, bd et cd égaux aux valeurs absolues de log(a/b), log(a/c), log(a/d), log(b/c), log(b/d) et log(c/d).

Les comparateurs $C_1$, $C_2$, $C_3$, $C_4$, $C_5$ et $C_6$ fournissent les signaux binaires $Q_1$, $Q_2$, $Q_3$, $Q_4$, $Q_5$ et $Q_6$. Ces signaux binaires sont égaux à l si le signal appliqué aux comparateurs $C_1$, $C_2$, $C_3$, $C_4$, $C_5$ et $C_6$ dépasse une valeur de seuil prédéterminée.

Les signaux binaires $Q_1$, $Q_2$, $Q_3$, $Q_4$, $Q_5$ et $Q_6$ sont appliqués au microprocesseur 70. Ces signaux forment une adresse qui commande le choix du couple de valeurs de déphasages, s'il n'y a pas au moins deux capteurs inutilisables.

Avec l'exemple de la Figure 7 si l'on a:

$$Q_1 = 1, \ Q_2 = 1, \ Q_3 = 1,$$

$$Q_4 = 0, \ Q_5 = 0, \ Q_6 = 0,$$

le capteur $T_{71}$ est en panne, et l'adresse 111000 commandera l'utilisation des signaux 7273 et 7374.

Si deux capteurs sont en panne au moins, quatre des signaux binaires seront nuls et le signal 81 sera généré indiquant l'impossibilité de la mesure de $\theta$.

Un autre moyen de détection d'un capteur ou d'un phasemètre en panne est utilisé, qui consiste à ajouter algébriquement les déphasages en 7172, 7273, 7374, et 7471. Cette somme étant nulle dans le cas où aucun capteur n'est en panne, elle est comparée à une valeur prédéterminée voisine de zéro. Si la somme obtenue est inférieure à cette valeur un signal 82 est généré indiquant qu'il y a un défaut au niveau des capteurs ou des phasemètres.

Suivant une variante de réalisation les signaux 71, 72, 73 et 74 provenant des capteurs sont envoyés sur le microprocesseur qui met en oeuvre un programme de calcul préablement enregistré dans une mémoire programmable, ce programme effectuant les opérations mises en oeuvre par les circuits de l'ensemble 90.

La Figure 8 montre une variante de l'invention pour laquelle l'antenne est formée de deux bases qui ont en commun un capteur. La première base se compose des capteurs $T_{81}$, $T_{82}$,

$T_{83}$ et $T_{84}$ et la seconde base des capteurs $T_{85}$, $T_{82}$, $T_{86}$ et $T_{87}$.

Le capteur $T_{82}$ est donc commun aux deux bases. Le fonctionnement du goniomètre est analogue à celui des Figures 4 et 5 sauf qu'un capteur est commun aux deux bases.

## Revendications

1. Goniomètre acoustique pour la détermination de la direction de l'angle $\theta$ d'une source sonore émettant des signaux sensiblement sinusoïdaux, comportant une antenne acoustique ayant au moins une base de mesure, ou base, composée de quatre capteurs ($T_{24}$—$T_{27}$) disposés selon un carré, deux premiers phasemètres ($P_{2527}$, $P_{2426}$) pour mesurer les déphasages entre les signaux reçus par respectivement deux couples de capteurs formant les diagonales du carré, et une chaîne de traitement des signaux de déphasage qui fournit la direction de la source sonore, chaque base correspondant à la surveillance dans une bande passante déterminée pour laquelle les déphasages mesurés restent inférieurs à une valeur $\Phi_{max}$ déterminée par le rapport signal sur bruit des signaux reçus dans la bande déterminée, caractérisé en ce qu'il comprend en outre deux second phasemètres ($P_{2526}$, $P_{2627}$) pour mesurer respectivement les déphasages entre les signaux reçus par deux couples de capteurs ayant un capteur commun et formant deux côtés adjacents du carré, et que la chaîne de traitement comprend un circuit de comparaison (30) pour comparer les signaux fournis par les deuxièmes phasemètres ($P_{2526}$, $P_{2627}$) à un signal de référence (V) donnant la valeur de $\Phi_{max}/2$ et délivrer un signal de commande, un circuit de commutation (8.5) qui reçoit les signaux de tous les phasemètres et sélectionne sous la commande du circuit de comparaison (30) les signaux des deux premiers phasemètres ($P_{2527}$, $P_{2426}$) si les signaux des deuxièmes phasemètres ($P_{2526}$, $P_{2627}$) sont tous deux inférieurs au signal de référence et sélectionne les signaux des deux deuxièmes phasemètres ($P_{2526}$, $P_{2627}$) si l'un de ceux-ci est inférieur au signal de référence, et un circuit de calcul (10.5) qui calcule l'angle de la direction de la source sonore à contrôle du signal de commande.

2. Goniomètre selon la revendication 1, caractérisé en ce qu'il comprend quatre phasemètres ($P_{6566}$, $P_{6865}$, $P_{6667}$, $P_{6768}$) pour mesurer les déphasages entre les signaux reçus par les quatre capteurs ($T_{65}$—$T_{68}$) pris deux à deux sur chaque côté du carré et quatre circuits (51) qui reçoivent les signaux de sortie des phasemètres pris deux à deux et comportant chacun un additionneur (100) et un soustracteur (101) pour obtenir les valeurs des déphasages $\varphi_1$ et $\varphi_2$ entre les signaux des capteurs formant les diagonales du carré.

3. Goniomètre suivant la revendication 2, caractérisé en ce que l'additionneur (100) et le soustracteur (101) fournissent les valeurs absolues $|\varphi_1|$ et $|\varphi_2|$ des déphasages et leurs signes sous forme binaire, que les valeurs absolues $|\varphi_1|$ et $|\varphi_2|$ sont comparées dans un comparateur (120), qu'un circuit de calcul recevant le signal binaire et les valeurs de $|\varphi_1|$ et $|\varphi_2|$ calcule un angle $\alpha$ tel que $\alpha=$arc tg R avec

$$R=|\varphi_1|/|\varphi_2| \quad \text{si} \quad |\varphi_1|<|\varphi_2|$$

et

$$R=|\varphi_2|/|\varphi_1| \quad \text{si} \quad |\varphi_1|>|\varphi_2|$$

et l'angle $\theta$ est fourni par un circuit de calcul réalisant l'opération:

$$\theta=p\alpha+q\,\frac{\pi}{2}$$

où $p=\pm 1$ et q un nombre entier, les valeurs de p et de q étant fournies par une mémoire adressable (140) qui reçoit les signaux binaires des signes de $\varphi_1$ et de $\varphi_2$ ainsi que le signal de comparaison entre $|\varphi_1|$ et $|\varphi_2|$.

4. Goniomètre suivant la revendication 3, caractérisé par le fait que les signaux des capteurs sont appliqués d'une part à quatre phasemètres ($P_{7273}$, $P_{7374}$, $P_{7471}$, $P_{7172}$) fournissant les déphasages entre capteurs d'un même côté du carré et d'autre part à des circuits de détection et d'intégration (61, 62, 63, 64) fournissant des signaux a, b, c et d, qu'un circuit de calcul (60) recevant les signaux a, b, c et d calcule les quantités

$$|\log\frac{a}{b}|, \quad |\log\frac{a}{c}|, \quad |\log\frac{a}{b}|,$$

$$|\log\frac{b}{c}|, \quad |\log\frac{b}{d}| \quad \text{et} \quad |\log\frac{c}{d}|,$$

que toutes ces quantités sont comparées dans un circuit de comparaison ($C_1$—$C_6$) à une valeur de seuil fournissant des signaux binaires $Q_1$, $Q_2$, $Q_3$, $Q_4$, $Q_5$ et $Q_6$, qui sont appliqués à un microprocesseur (70) qui reçoit par ailleurs les quatre valeurs de déphasage entre capteurs d'un même côté, que le microprocesseur (70) comporte une mémoire contenant le programme de calcul de l'angle $\theta$ qui est mis en oeuvre avec un couple de valeurs de déphasages sélectionné par ces signaux binaires, et que les signaux binaires permettent de générer un signal indiquant que deux capteurs sont inutilisables.

5. Goniomètre suivant la revendication 4, caractérisé par le fait qu'un circuit de calcul recevant les quatre déphasages (7172, 7273, 7374, 7471) fournis par les quatre phasemètres (P7172, P7273, P7374, P7471) fournit la somme algébrique de ces déphasages et que la valeur de cette somme est comparée à une valeur de seuil; le résultat de cette comparaison servant à générer un signal (82) indiquant un défaut possible au niveau des capteurs ou des phasemètres.

6. Goniomètre suivant une quelconque des revendications 1 à 5, caractérisé par le fait qu'il comporte deux bases (T81—T84; T82, T85, T86, T87) pour deux bandes de fréquence et qu'un capteur (T82) est commun aux deux bases.

## Patentansprüche

1. Akustisches Goniometer für die Bestimmung des Winkels $\theta$ der Richtung einer Schallquelle, die im wesentlichen sinusförmige Signale aussendet, mit einer akustischen Antenne, die wenigstens eine Basis aus vier im Quadrat angeordneten Signalaufnehmern ($T_{24}$—$T_{27}$) aufweist, zwei ersten Phasenmessern ($P_{2527}$, $P_{2426}$) zum Messen der Phasenverschiebungen zwischen den Signalen, die von die Diagonalen des Quadrats bildenden Signalaufneumerpaaren empfangen werden, und einer Verarbeitungsanordnung für die Phasenverschiebungssignale, die die Richtung der Schallquelle liefert, wobei jede Basis der Überwachung in einem vorbestimmten Durchlaßband entspricht, für das die gemessenen Phasenverschiebungen unter einem Wert $\Phi_{max}$ bleiben, der durch den Störabstand der in dem vorbestimmten Durchlaßband empfangenen Signale bestimmt wird, dadurch gekennzeichnet, daß ferner zwei zweite Phasenmesser ($P_{2526}$, $P_{2627}$) vorgesehen sind zum Messen der Phasenverschiebungen zwischen den Signalen, die von zwei Signalaufnehmerpaaren empfangen werden, die einen Signalaufnehmer gemeinsam haben und zwei benachbarte Seiten des Quadrats bilden, und daß die Verarbeitungsanordnung eine Komparatorschaltung (30) enthält, die die von den zweiten Phasenmessern ($P_{2526}$, $P_{2627}$) gelieferten Signale mit einem Bezugssignal (V) mit dem Wert $\phi_{max}/2$ vergleicht und ein Steuersignal liefert, außerdem einen Schaltkreis (8.5) enthält, der die Signale aller Phasenmesser empfängt und unter der Steuerung durch die Komparatorschaltung die Signale der zwei ersten Phasenmesser ($P_{2527}$, $P_{2426}$) auswählt, wenn die Signale der zweiten Phasenmesser ($P_{2526}$, $P_{2627}$) kleiner als das Bezugssignal sind, und die Signale der zweiten Phasenmesser ($P_{2526}$, $P_{2627}$) auswählt, wenn eines der beiden Signale kleiner als das Bezugssignal ist, und außerdem eine Rechenschaltung (10.5) enthält, die aus den auf diese Weise ausgewählten Signallen und unter der Steuerung durch das Steuersignal den Winkel der Richtung des Schallquelle berechnet.

2. Goniometer nach Anspruch 1, dadurch gekennzeichnet, daß es vier Phasenmesser ($P_{6566}$, $P_{6865}$, $P_{6667}$, $P_{6768}$) zum Messen der Phasenverschiebungen zwischen den von den vier jeweils paarweise an jeder Seite des Quadrats genommenen Signalaufnehmern ($T_{65}$—$T_{68}$) empfangenen Signalen enthält und daß es ferner vier Schaltungseinheiten (51) enthält, die

die Ausgangsignale der paarweise genommenen Phasenmesser empfangen und jeweils eine Additionsschaltung (100) und eine Subtraktionsschaltung (101) enthalten, damit die Werte der Phasenverschiebungen zwischen den Signalen der die Diagonalen des Quadrats bildenden Signalaufnehmern erhalten werden.

3. Goniometer nach Anspruch 2, dadurch gekennzeichnet, daß die Additionsschaltung (100) und die Subtraktionsschaltung (101) die Absolutwerte $\phi_1$ und $\phi_2$ und ihre Vorzeichen in Binärform liefern, daß die Absolutwerte $|\phi_1|$ und $|\phi_2|$ in einem Komparator (120) verglichen werden, daß eine Rechenschaltung, welche das Binärsignal und die Werte von $|\phi_1|$ und $|\phi_2|$ empfängt, einen Winkel $\alpha$ derart berechnet, daß $\alpha = $ arc tg R, mit

$$R = |\phi_1|/|\phi_2|, \text{ wenn } |\phi_1| < |\phi_2|$$

und

$$R = |\phi_2|/|\phi_1|, \text{ wenn } |\phi_1| > |\phi_2|,$$

und der Winkel $\theta$ durch eine Rechenschaltung geliefert wird, welche die Operation

$$\theta = p\alpha + q \frac{\pi}{2}$$

ausführt, worin $p = \pm 1$ und q eine ganze Zahl ist, wobei die Werte von p und q durch einen adressierbaren Speicher (150) geliefert werden, welcher die Binärsignale der Vorzeichen von $\phi_1$ und von $\phi_2$ sowie das Signal für den Vergleich zwischen $|\phi_1|$ und $|\phi_2|$ empfängt.

4. Goniometer nach Anspruch 3, dadurch gekennzeichnet, daß die Signal der Signalaufnehmer einerseits an vier Phasenmesser ($P_{7273}$, $P_{7374}$, $P_{7471}$, $P_{7172}$) angelegt werden, welche die Phasenverschiebungen zwischen auf der gleichen Seite des Quadrats liegenden Signalaufnehmern liefern, und andererseits an Detektions- und Integrationsschaltungen (61, 62, 63, 64) angelegt werden, welche die Signale a, b, c und d liefern, daß eine die Signale a, b, c und d empfangende Rechenschaltung die Größen

$$\left|\log \frac{a}{b}\right|, \quad \left|\log \frac{a}{c}\right|, \quad \left|\log \frac{a}{b}\right|,$$

$$\left|\log \frac{b}{c}\right|, \quad \left|\log \frac{b}{d}\right| \text{ und } \left|\log \frac{c}{d}\right|$$

berechnet, und daß alle diese Größen mit einem Schwellwert in einer Komparatorschaltung verglichen werden, welche die Binärsignale $Q_1$, $Q_2$, $Q_3$, $Q_4$, $Q_5$, $Q_6$ liefert, welche an einen Mikroprozessor angelegt werden, der ferner die vier Phasenverschiebungswerte zwischen nebeneinanderliegenden Signalaufnehmern empfängt, sowie daß der Mikroprozessor einen Speicher umfaßt, der das Rechenprogramm zur Berechnung des Winkels $\theta$ enthält, das gemein-

sam mit zwei durch dieses Binärsignal ausgewählten Phasenverschiebungswerten angewendet wird, und daß die Binärsignale die Erzeugung eines Signals gestatten, welches anzeigt, daß die beiden Signalaufnehmer unbrauchbar sind.

5. Goniometer nach Anspruch 4, dadurch gekennzeichnet, daß eine Rechenschaltung, welche die von den vier Phasenmessern gelieferten Phasenverschiebungen empfängt, die algebraische Summe dieser Phasenverschiebungen liefert und daß der Wert dieser Summe mit einem Schwellwert verglichen wird, wobei das Ergebnis dieses Vergleichs dazu dient, ein Signal zu erzeugen, welches einen möglichen Fehler an den Signalaufnehmern oder Phasenmessern anzeigt.

6. Goniometer nach einem der Ansprüche 1 bis 5, dadurch gekennzeichnet, daß es zwei Basen für zwei Frequenzbänder enthält und daß ein Signalaufnehmer beiden Basen gemeinsam ist.

**Claims**

1. Acoustic goniometer for the determination of the direction of sound sources emitting substantially sinusoidal signals, comprising an acoustic antenna having at least one base composed of four probes ($T_{24}$—$T_{27}$) arranged in quadriform, two first phasemeters ($P_{2527}$, $P_{2426}$) for measuring the phase shifts between the signals received by pairs of probes forming the diagonals of the square, and a processing chain for said phase shift signals for delivering the direction of the sound source, each base corresponding to the surveillance in a predetermined transmission band in which the measured phase shifts remain below a value $\phi_{max}$ determined by the signal-to-noise ratio of the signals received in said predetermined transmission band, characterized in that two second phasemeters ($P_{2526}$, $P_{2627}$) are provided for measuring the phase shifts between signals received by two pairs of probes having one probe in common and forming two adjacent sides of the square, and in that the processing chain includes a comparator circuit (30) which compares the signals from the second phasemeters ($P_{2526}$, $P_{2627}$) with a reference signal (V) having the value $\phi_{max}/2$ and delivers a control signal, further includes a switching circuit (8.5) which receives the signals from all phasemeters and which, under the control of the comparator circuit, selects the signals from the two first phasemeters ($P_{2527}$, $P_{2426}$) when the signals from the second phasemeters ($P_{2526}$, $P_{2627}$) are less than the reference signal, and selects the signals from the second phasemeters ($P_{2526}$, $P_{2627}$) when one of the two signals is less than the reference signal, and further includes a calculator circuit (10.5) which, under the control of the control signal, calculates from the so selected signals the angle of the direction of the sound source.

2. Goniometer according to claim 1, characterized in that it further comprises four phasemeters ($P_{6566}$, $P_{6865}$, $P_{6667}$, $P_{6768}$) for measuring the phase shifts between the signals received by the probes ($T_{65}$—$T_{68}$) taken in pairs at each side of the square, and in that it further comprises four circuits (51) which receive the output signals of the phasemeters taken in pairs, each circuit including an adder (100) and a subtractor (101) for obtaining the values of the phase shifts between the signals of the probes forming the diagonals of the square.

3. Goniometer according to claim 2, characterized in that the adder (100) and the subtractor (101) supply the absolute values of $|\phi_1|$ and $|\phi_2|$ and their signs in binary form, that the absolute values $|\phi_1|$ and $|\phi_2|$ are compared in a comparator (120) that a computing circuit receiving the binary signal and the values of $|\phi_1|$ and $|\phi_2|$ computes an angle $\alpha$ such that $\alpha=$arc tg R, with

$$R=|\phi_1|/|\phi_2| \text{ if } |\phi_1|<|\phi_2|$$

and

$$R=|\phi_2|/|\phi_1| \text{ if } |\phi_1|>|\phi_2|,$$

and the angle $\theta$ is supplied by a computing circuit performing the operation

$$\theta=p\alpha+q\;\frac{\pi}{2}$$

wherein $p=\pm1$ and q an integer, the values of p and q being supplied by an addressable memory (150) receiving the binary signals of the signs of $\phi_1$ and $\phi_2$ as well as the signal from the comparison between $|\phi_1|$ and $|\phi_2|$.

4. Goniometer according to claim 3, characterized in that the signals of the probes are applied on the one hand to four phasemeters ($P_{7273}$, $P_{7374}$, $P_{7471}$, $P_{7172}$) supplying the phase shifts between probes at the same side of the square and on the other hand to detection and integrating circuits (61, 62, 63, 64) which provide signals a, b, c and d, that a computing circuit receiving the signals a, b, c and d computes the values

$$|\log\frac{a}{b}|,\quad |\log\frac{a}{c}|,\quad |\log\frac{a}{b}|,$$

$$|\log\frac{b}{c}|,\quad |\log\frac{b}{d}| \text{ et } |\log\frac{c}{d}|,$$

that all of these values are compared in a threshold comparator circuit supplying binary signals $Q_1$, $Q_2$, $Q_3$, $Q_4$, $Q_5$ and $Q_6$ which are applied to a microprocessor which further receives the four phase shift values of the phase shifts between adjacent probes, that the microprocessor comprises a memory containing the program for computing the angle $\theta$ which is

used in association with a couple of phase shift values selected by these binary signals, and in that the binary signals permit the generation of a signal indicating that two probes are defective.

5. Goniometer according to claim 4, characterized by the fact that a computing circuit receiving the four phase shifts supplied by the four phasemeters provides the algebraic sum of these phase shifts and that the value of this sum is compared to a threshold value, the result of this comparison being used for the generation of a signal indicating a possible failure of the probes or of the phasemeters.

6. Goniometer according to any of claims 1 to 5, characterized by the fact that it comprises two bases for two frequency bands and that the two bases have one probe in common.

FIG. 1

FIG. 2

1

FIG. 3

(a)

(b)

(c)

(d)

(e)

FIG. 4

FIG.5

FIG.6

Fig. 7

Fig. 8